# FASCICULE DE BREVET EUROPEEN

(11) **EP 0 699 409 B1**
(45) Date de publication et mention de la délivrance du brevet: **04.08.1999**
(21) Numéro de dépôt: 95401974.1
(22) Date de dépôt: 30.08.1995
(51) Int. Cl.: A47J 42/56

(54) **Mixeur ménager**
Haushaltsmischer
Domestic mixer

(30) Priorité: 02.09.1994 FR 9410586
(43) Date de publication de la demande: 06.03.1996
(73) Titulaire: MOULINEX S.A., 75008 Paris (FR)
(72) Inventeur: Beaudet, Jean-Yves, F-61400 Haleine (FR); Marriere, Marc, F-53300 Ambrieres Les Vallees (FR); Trocherie, Jean-Pierre, F-53370 Saint Pierre Des Nids (FR)
(74) Mandataire: Busquets, Jean-Pierre

(56) Documents cités:
- EP-A- 0 344 061
- EP-A- 0 549 818
- DE-A- 1 945 286
- DE-A- 3 540 370
- FR-A- 1 201 685
- FR-A- 2 442 033
- GB-A- 2 044 382

## Description

La présente invention se rapporte aux mixeurs ménagers qui comportent un socle renfermant un moteur électrique dont l'arbre de sortie fait verticalement saillie de la partie supérieure du socle, un bol ouvert qui est destiné à être fermé par un couvercle amovible, qui est monté de manière amovible sur le socle et dont le fond porte un outil rotatif solidaire d'un arbre vertical traversant ledit bol et venant s'accoupler avec l'arbre de sortie du moteur, un organe de transmission faisant partie intégrante du bol, et un organe de commande monté mobile à travers la partie supérieure du socle et actionnable par ledit organe de transmission.

On sait que de tels mixeurs ménagers sont particulièrement efficaces pour mélanger, mixer, battre, émulsionner les matières alimentaires, ainsi que pour piler de la glace.

Dans des mixeurs connus de ce genre, tels que celui décrit dans le document DE-A-1 945 286, le couvercle amovible est maintenu sur le bol, après mise en place par l'utilisateur, au moyen d'un système de fixation par exemple du type à encliquetage élastique. Un grave inconvénient de ce type d'appareil réside dans la possible mise en marche de l'appareil par un enfant lorsque le couvercle est retiré, l'outil en mouvement risquant alors de provoquer de graves blessures pour l'enfant par suite de l'introduction de sa main dans le bol ouvert.

L'invention a pour but d'éliminer cet inconvénient et de réaliser un mixeur ménager, du type exposé ci-dessus, qui soit équipé d'un dispositif de sécurité interdisant la mise en marche de l'appareil tant que le couvercle du bol n'est pas fermé.

Selon l'invention, le couvercle et le bord supérieur du bol sont assujettis l'un à l'autre par au moins un verrou comprenant un coulisseau qui est disposé dans un logement pratiqué dans le couvercle, qui présente une patte pourvue d'un doigt d'encliquetage automatique et destinée à traverser une ouverture ménagée dans le bord supérieur du bol, et qui est mobile entre une position de verrouillage élastique en laquelle il est amené lorsque le couvercle est mis en place sur le bol et dans laquelle, d'une part, ledit doigt d'encliquetage est en prise avec une pièce d'appui solidaire du bol, et d'autre part, ladite patte actionne l'organe de transmission de manière à déplacer l'organe de commande vers une position de travail dans laquelle il actionne un interrupteur de sécurité agencé dans le circuit d'alimentation électrique du moteur afin d'autoriser la mise en marche du moteur, et une position de déverrouillage en laquelle il est amené par coulissement sous l'action d'un organe d'actionnement solidaire du coulisseau et dans laquelle ledit doigt d'encliquetage est dégagé de la pièce d'appui de manière qu'après retrait du couvercle, l'organe de commande vienne occuper une position de repos dans laquelle il n'actionne pas ledit interrupteur de sécurité afin de mettre le moteur à l'arrêt.

Ainsi, grâce à la présence de ce verrou équipant le couvercle, il est désormais impossible de mettre en marche le moteur de l'appareil lorsque le couvercle du bol n'est pas verrouillé, évitant ainsi tout risque de blessure. Par ailleurs, le fait que tous les constituants de ce dispositif de sécurité fassent partie intégrante de l'appareil permet avantageusement de conserver l'esthétique habituelle de ce type d'appareil.

Les caractéristiques et avantages de l'invention ressortiront d'ailleurs de la description qui va suivre d'un mode particulier de réalisation pris à titre d'exemple non limitatif illustré aux dessins annexés dans lesquels :
- la figure 1 est une vue schématique en coupe verticale d'un mixeur ménager selon l'invention, montrant un couvercle de bol en position de verrouillage ; et
- la figure 2 est une vue partielle, à plus grande échelle et en coupe, de l'ensemble bol-couvercle en position de verrouillage.

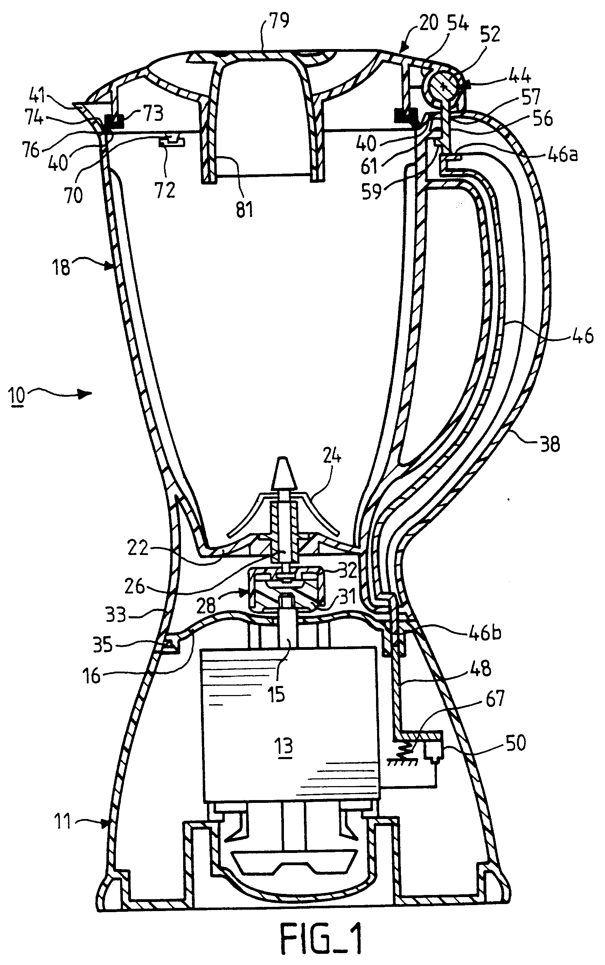

Le mixeur ménager 10 représenté schématiquement à la figure 1 comprend un socle 11 renfermant un moteur électrique 13 dont l'arbre de sortie 15 fait verticalement saillie de la partie supérieure 16 du socle, et un bol 18, par exemple d'une capacité de 1,5 litre, qui est réalisé par exemple en matière plastique, qui est destiné à être fermé par un couvercle amovible 20, qui est monté de manière amovible sur le socle 11 et dont le fond 22 porte un outil rotatif 24, tel qu'un couteau, solidaire d'un arbre vertical 26 traversant la paroi de fond 22 du bol et adapté à venir s'accoupler avec l'arbre de sortie 15 du moteur 13 à l'aide d'un dispositif d'accouplement 28.

Ce dispositif d'accouplement 28, d'une manière connue en soi, comprend un entraîneur en caoutchouc 31 monté en extrémité de l'arbre de sortie 15 du moteur et coiffé par une cloche rigide 32 portée par l'arbre 26.

La paroi latérale du bol 18 se prolonge au-delà de la paroi de fond 22 par une jupe 33 qui est maintenue en place sur le socle 11 au moyen de tout système approprié de fixation réversible tel que par exemple un système à baïonnette illustré partiellement en 35 sur la figure 1, assurant ainsi la fixation amovible du bol 18 sur le socle 11.

Comme le montre la figure 1, le bol 18 possède une poignée latérale fermée et creuse 38 destinée à faciliter son maniement et s'étendant sur toute sa hauteur. Sur son bord supérieur 40, le bol 18 est pourvu d'un bec verseur 41.

Selon l'invention, figure 1, le couvercle 20 et le bord supérieur 40 du bol 18 sont assujettis l'un à l'autre par un verrou 44 qui est solidaire du couvercle 20 et qui est relié, par l'intermédiaire d'un organe de transmission 46 faisant partie intégrante du bol 18 et actionnable par le verrou, à un organe de commande 48 monté mobile à travers la partie supérieure 16 du socle 11 entre deux positions, à savoir :
- une position de travail (figure 1) en laquelle il est amené lorsque le couvercle 20 est bloqué à l'aide du verrou 44 et dans laquelle, sous l'action de l'organe de transmission 46 commandé par le verrou 44, il actionne un interrupteur de sécurité 50 agencé dans le circuit d'alimentation électrique du moteur 13 de manière à autoriser la mise en marche du moteur ;
- un position de repos (non figurée) en laquelle il est amené lorsque le couvercle 20 est ouvert et dans laquelle il n'actionne pas l'interrupteur de sécurité 50 de manière à mettre le moteur 13 à l'arrêt.

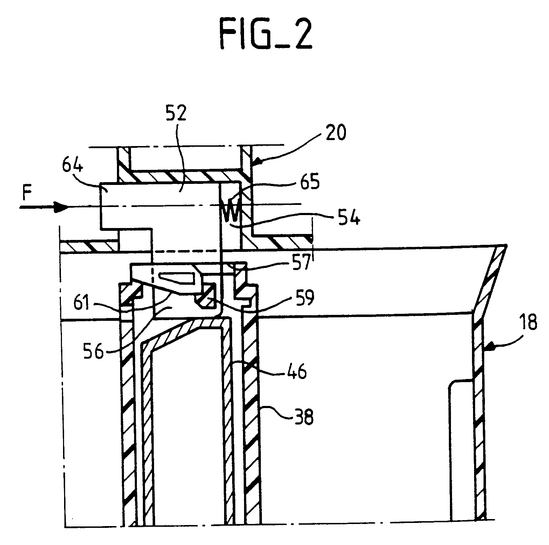

Dans l'exemple de réalisation illustré à la figure 1, le verrou 44 se compose d'un coulisseau horizontal 52, par exemple de forme cylindrique, disposé dans un logement approprié formant cage 54 pratiqué dans le couvercle 20 et pourvu d'une patte d'actionnement 56 qui est adaptée à s'engager verticalement dans la poignée 38 à travers une ouverture 57 ménagée dans le bord supérieur 40 du bol 18 au niveau de la liaison de celui-ci avec la poignée 38 et qui porte d'équerre un doigt d'encliquetage automatique 59 destiné à venir coopérer avec une nervure d'appui 61 formée sur la surface externe de la paroi latérale du bol 18 lorsque le couvercle 20 est verrouillé (figures 1 et 2).

Le coulisseau 52 est mobile entre une position de verrouillage élastique dans laquelle le doigt d'encliquetage 59 est en prise avec la nervure 61 (figures 1 et 2) et une position de déverrouillage dans laquelle le doigt d'encliquetage 59 est dégagé de la nervure 61 et vient en regard de l'ouverture 57 sous l'action d'un organe de manoeuvre 64 (figure 2), tel que par exemple un bouton-poussoir, solidaire du coulisseau 52 et monté mobile à l'encontre d'un moyen élastique 65 (figure 2) tel que par exemple un ressort de compression interposé entre le fond du logement 54 du couvercle 20 et le bouton-poussoir 64.

Dans cet exemple de réalisation, l'organe de transmission 46 entre le verrou 44 et l'organe de commande 48, figure 1, est une tringle plate qui est montée coulissante à l'intérieur de la poignée 38, dont l'extrémité supérieure 46a coopère par appui avec l'extrémité libre de la patte 56 du coulisseau 52 en position de verrouillage, et dont l'extrémité inférieure 46b débouche de la partie inférieure de la poignée 38 et coopère avec l'organe de commande 48. Présentement, cet organe de commande 48 de l'interrupteur de sécurité 50 est réalisé sous la forme d'un doigt monté coulissant verticalement à travers la partie supérieure 16 du socle 11 en étant sollicité par un moyen élastique 67 (figure 1) tel que par exemple un ressort de compression.

Le couvercle 20 comporte de plus une pluralité d'ergots élastiques 70, dont un seul est représenté à la figure 1, répartis sur le pourtour de sa face latérale externe et destinés à venir s'engager par encliquetage, lors de la fermeture du couvercle 20, sur des crans externes correspondants, de profil adapté, formés respectivement sur les bordures supérieures de lumières 72 ménagées dans le bol 18.

Comme le montre la figure 1, le couvercle 20 en position verrouillée porte intérieurement un joint d'étanchéité annulaire 73 pourvu d'une lèvre périphérique 74 appliquée contre un épaulement annulaire 76 formé sur la surface interne de la paroi latérale du bol 18, sensiblement au niveau du bord supérieur 40 de ce dernier.

On a représenté en 79 sur la figure 1 un bouchon amovible, d'une structure connue en soi, engagé dans une cheminée verticale 81 pratiquée dans le couvercle 20 et destinée, après retrait du bouchon, au passage par exemple d'un alcool lors de la préparation d'un cocktail.

Il convient de souligner que le mixeur selon l'invention peut être équipé de deux verrous identiques 44 du type décrit ci-dessus, positionnés l'un par rapport à l'autre dans le couvercle 20 d'une manière diamétralement opposée, le bol du mixeur possédant alors deux poignées latérales opposées creuses 38, ceci dans le but de garantir une sécurité absolue.

En regard des figures 1 et 2, le fonctionnement du dispositif de sécurité incorporé dans le mixeur 10 conforme à l'invention est le suivant.

Lors de la mise en place du couvercle 20 suivant un mouvement sensiblement vertical, les ergots élastiques 70 s'engagent par encliquetage sur les crans correspondants du bol, et simultanément, la patte 56 du verrou 44 s'engage élastiquement dans la poignée 38 à travers l'ouverture 57 de telle sorte que le doigt 59 de la patte vienne en prise de manière appropriée avec la nervure 61 à l'encontre du ressort 65. Au cours de cet engagement de la patte 56 du verrou 44, l'extrémité libre de la patte 56 appuie sur la tringle 46 qui se déplace alors vers le bas et qui, à son tour, provoque le déplacement vers le bas du doigt 48 à l'encontre de la force de rappel du ressort 67 pour l'amener dans sa position de travail dans laquelle il actionne l'interrupteur de sécurité 50 de manière à autoriser la mise en marche du moteur 13, voir figure 1. Le couvercle 20 étant fermé et bloqué par le verrou 44, le mixeur 10 est prêt à fonctionner.

En fin de préparation culinaire, l'utilisateur appuie sur le bouton-poussoir 64 dans le sens de la flèche F (figure 2), à l'encontre de la force de rappel du ressort 65, de manière que le coulisseau 52 se déplace sur une course telle que le doigt 59 de la patte 56 du verrou 44 se dégage de la nervure 61 pour venir à l'aplomb de l'ouverture 57 de la poignée 38. Le coulisseau 52 étant ainsi déverrouillé, l'utilisateur enlève ensuite par traction vers le haut le couvercle 20 après désencliquetage des ergots 70 et simultanément après dégagement par translation de la patte 56 du verrou 44 à travers l'ouverture 57 de la poignée 38. Après retrait du couvercle 20 ainsi déverrouillé, la tringle 46 se déplace alors vers le haut sous l'action du doigt 48 qui est rappelé vers le haut par le ressort 67 dans sa position de repos dans laquelle il n'actionne pas l'interrupteur 50 de manière à mettre le moteur 13 à l'arrêt. Le moteur 13 étant ainsi désactivé lorsque le couvercle 20 est retiré, le mixeur 10 ne peut donc fonctionner, assurant ainsi une totale sécurité.

## Revendications

1. Mixeur ménager comportant un socle (11) renfermant un moteur électrique (13) dont l'arbre de sortie (15) fait verticalement saillie de la partie supérieure (16) du socle, un bol ouvert (18) qui est destiné à être fermé par un couvercle amovible (20), qui est monté de manière amovible sur le socle (11) et dont le fond (22) porte un outil rotatif (24) solidaire d'un arbre vertical (26) traversant ledit bol et venant s'accoupler avec l'arbre de sortie (15) du moteur, un organe de transmission (46) faisant partie intégrante du bol (18), et un organe de commande (48) monté mobile à travers la partie supérieure (16) du socle (11) et actionnable par ledit organe de transmission (46),
**caractérisé en ce que le** couvercle (20) et le bord supérieur (40) du bol (18) sont assujettis l'un à l'autre par au moins un verrou (44) comprenant un coulisseau (52) qui est disposé dans un logement (54) pratiqué dans le couvercle (20), qui présente une patte (56) pourvue d'un doigt d'encliquetage automatique (59) et destinée à traverser une ouverture (57) ménagée dans le bord supérieur (40) du bol (18), et qui est mobile entre une position de verrouillage élastique en laquelle il est amené lorsque le couvercle (20) est mis en place sur le bol (18) et dans laquelle, d'une part, ledit doigt d'encliquetage (59) est en prise avec une pièce d'appui (61) solidaire du bol (18), et d'autre part, ladite patte (56) actionne l'organe de transmission (46) de manière à déplacer l'organe de commande (48) vers une position de travail dans laquelle il actionne un interrupteur de sécurité (50) agencé dans le circuit d'alimentation électrique du moteur afin d'autoriser la mise en marche du moteur, et une position de déverrouillage en laquelle il est amené par coulissement sous l'action d'un organe d'actionnement (64) solidaire du coulisseau (52) et dans laquelle ledit doigt d'encliquetage (59) est dégagé de la pièce d'appui (61) de manière qu'après retrait du couvercle (20), l'organe de commande (48) vienne occuper une position de repos dans laquelle il n'actionne pas ledit interrupteur de sécurité (50) afin de mettre le moteur à l'arrêt.

2. Mixeur ménager selon la revendication 1,
**caractérisé en ce que** l'organe d'actionnement (64) est un bouton-poussoir associé à un ressort de rappel (65) qui est interposé entre le fond du logement (54) et le bouton-poussoir (64) et qui est adapté à maintenir le coulisseau (52) dans sa position de verrouillage, ledit coulisseau (52) étant déplacé vers sa position de déverrouillage sous l'action du bouton-poussoir, à l'encontre de la force de rappel du ressort (65).

3. Mixeur ménager selon la revendication 1 ou 2,
**caractérisé en ce que** le bol (18) possédant une poignée latérale fermée et creuse (38) s'étendant sur toute la hauteur du bol, la patte (56) du coulisseau (52) est adaptée à s'engager dans la poignée (38) au niveau de la liaison de la poignée avec le bord supérieur du bol, et en ce que l'organe de transmission est constitué par une tringle (46) montée coulissante à l'intérieur de la poignée (38) du bol, tandis que l'organe de commande est constitué par un doigt (48) monté coulissant verticalement à travers la partie supérieure (16) du socle (11) en étant sollicité par un ressort de rappel (67), ladite tringle (46) étant susceptible d'être déplacée, d'une part, vers le bas par appui de la patte (56) du coulisseau (52) en position de verrouillage sur l'extrémité supérieure (46a) de la tringle, provoquant alors le déplacement vers le bas dudit doigt (48), à l'encontre de la force de rappel du ressort (67), pour l'amener dans sa position de travail, et d'autre part, vers le haut lors du retrait du couvercle (20) pour lequel le coulisseau (52) est en position de déverrouillage, ledit doigt (48) étant alors rappelé vers le haut par le ressort (67) dans sa position de repos.

4. Mixeur ménager selon l'une quelconque des revendications précédentes,
**caractérisé en ce que** la face latérale externe du couvercle (20) comporte sur son pourtour une pluralité d'ergots élastiques (70) venant s'engager par encliquetage, lors de la fermeture du couvercle (20), sur des crans correspondants pratiqués dans le bol (18).

5. Mixeur ménager selon l'une quelconque des revendications précédentes,
**caractérisé en ce que** le couvercle (20) porte intérieurement un joint d'étanchéité annulaire (73) pourvu d'une lèvre périphérique (74) venant s'appliquer, lors de la fermeture du couvercle (20), contre un épaulement annulaire (76) formé sur la face interne du bol (18).

6. Mixeur ménager selon l'une quelconque des revendications précédentes,
**caractérisé en ce que** le couvercle (20) et le bord supérieur (40) du bol (18) sont assujettis l'un à l'autre par deux verrous (44) diamétralement opposés, solidaires du couvercle (20).

## Claims

1. Domestic mixer comprising a pedestal (11) enclosing an electric motor (13) whose output shaft (15) projects vertically from the top part (16) of the pedestal, an open bowl (18) which is intended to be closed by a removable lid (20), which is removably mounted on the pedestal (11) and whose base (22) carries a rotary tool (24) integral with a vertical shaft (26) passing through said bowl and being coupled with the output shaft (15) of the motor, a transmission member (46) forming an integral part of the bowl (18), and a control member (48) movably mounted through the top part (16) of the pedestal (11) and actuatable by said transmission member (46),
**characterised in that** the lid (20) and the top edge (40) of the bowl (18) are subject to each other by at least one lock (44) comprising a slide (52) which is disposed in a housing (54) formed in the lid (20), which has a lug (56) provided with an automatic snapping-in finger (59) and intended to pass through an opening (57) formed in the top edge (40) of the bowl (18), and which is able to move between an elastic locking position into which it is brought when the lid (20) is put in place on the bowl (18) and in which, on the one hand, said snapping-in finger (59) is in engagement with a bearing piece (61) integral with the bowl (18), and on the other hand, said lug (56) actuates the transmission member (46) so as to move the control member (48) to a working position in which it actuates a safety switch (50) arranged in the electrical power supply circuit of the motor in order to enable the motor to start up, and an unlocking position into which it is brought by sliding under the action of an operating member (64) integral with the slide (52) and in which said snapping-in finger (59) is released from the bearing piece (61) so that, after removal of the lid (20), the control member (48) comes to occupy an idle position in which it does not actuate said safety switch (50) in order to stop the motor.

2. Domestic mixer according to claim 1,
**characterised in that** the operating member (64) is a push button associated with a return spring (65) which is interposed between the base of the housing (54) and the push button (64) and which is adapted to hold the slide (52) in its locking position, said slide (52) being moved towards its unlocking position under the action of the push button, against the return force of the spring (65).

3. Domestic mixer according to claim 1 or 2,
**characterised in that**, the bowl (18) having a closed hollow lateral handle (38) extending over the entire height of the bowl, the lug (56) of the slide (52) is adapted to engage in the handle (38) at the connection of the handle with the top edge of the bowl, and in that the transmission member consists of a rod (46) slidably mounted inside the handle (38) of the bowl, whilst the control member consists of a finger (48) mounted so as to slide vertically through the top part (16) of the pedestal (11), being acted on by a return spring (67), said rod (46) being able to be moved, on the one hand, downwards by means of the bearing of the lug (56) on the slide (52) in the locking position on the top end (46a) of the rod, then causing the downward movement of said finger (48), against the return force of the spring (67), to bring it into its working position, and on the other hand, upwards when the lid (20) is removed, where the slide (52) is in the unlocking position, said finger (48) then being returned upwards by the spring (67) in its idle position.

4. Domestic mixer according to any one of the preceding claims,
**characterised in that** the external lateral face of the lid (20) has on its periphery a plurality of elastic studs (70) coming to engage, by snapping in, when the lid (20) is closed, on corresponding notches formed in the bowl (18).

5. Domestic mixer according to any one of the preceding claims,
**characterised in that** the lid (20) carries on the inside an annular sealing joint (73) provided with a peripheral lip (74) coming to be applied, when the lid (20) is closed, against an annular shoulder (76) formed on the internal face of the bowl (18).

6. Domestic mixer according to any one of the preceding claims,
**characterised in that** the lid (20) and the top edge (40) of the bowl (18) are subject to each other by two diametrically opposed locks (44), integral with the lid (20).

## Patentansprüche

1. Haushaltsmixer mit einem Sockel (11), der einen elektrischen Motor (13) umschließt, dessen Abtriebswelle (15) vertikal aus dem oberen Bereich (16) des Sockels herausragt, einem offenen Behälter (18), der durch einen abnehmbaren Deckel (20) schließbar ist und abnehmbar auf dem Sockel (11) montiert ist und dessen Boden (22) ein drehbares Werkzeug (24) aufweist, das an einer vertikalen Welle (26) befestigt ist, die den Behälter durchsetzt und an die Abtriebswelle (15) des Motors gekuppelt wird, einem Übertragungselement (46), welches integrierter Teil des Behälters (18) ist, und einem Steuerelement (48), das durch den oberen Bereich (16) des Sockels (11) hindurch beweglich montiert und vom Übertragungselement (46) betätigbar ist, **dadurch gekennzeichnet, daß** der Deckel (20) und der obere Rand (40) des Behälters durch mindestens einen Riegel (44) miteinander zusammenwirken sind, der einen Schieber (52) aufweist, der in einem im Deckel (20) ausgebildeten Sitz (54) angeordnet ist und der eine Klaue (56) mit einem Einhakfinger (59) zum automatischen Einrasten aufweist, eine im oberen Rand (40) des Behälters (18) ausgebildete Öffnung (57) durchsetzt und verschiebbar ist zwischen einer elastischen Verriegelungsstellung, in welche er gebracht wird, wenn der Deckel (20) auf den Behälter (18) aufgelegt wird und in welcher einerseits der Einhakfinger (59) an einem am Behälter (18) befestigten Halteelement (61) angreift und andererseits die Klaue (56) das Übertragungselement (46) so beaufschlagt, daß das Steuerelement (48) in eine Betriebsstellung bewegt wird, in welcher es einen Sicherheitsschalter (50) betätigt, der im elektrischen Versorgungsstromkreis angeordnet ist, um das Einschalten des Motors zu ermöglichen, und einer Entriegelungsstellung, in welche er durch Verschiebung unter der Wirkung eines mit dem Schieber (52) fest verbundenen Betätigungselements (64) gebracht wird, und in welcher der Einhakfinger (59) vom Halteelement (61) so entfernt ist, daß nach dem Abnehmen des Deckels (20) das Steuerelement (48) eine Ruhestellung einnimmt, in welches es den Sicherheitsschalter (50) nicht betätigt, um den Motor auszuschalten.

2. Haushaltsmixer nach Anspruch 1, **dadurch gekennzeichnet, daß** das Betätigungselement (64) ein Druckknopf ist, der mit einer Feder (65) zusammenwirkt, die zwischen der Hinterwand des Sitzes (54) und dem Druckknopf (64) angeordnet ist und den Schieber (52) in seiner Verriegelungsstellung hält, wobei der Schieber (52) unter Betätigung des Druckknopfes gegen die Kraft der Feder (65) in seine Entriegelungsstellung bewegt wird.

3. Haushaltsmixer nach Anspruch 1 oder 2, **dadurch gekennzeichnet, daß** der Behälter (18) einen seitlichen geschlossenen und hohlen Griff (38) aufweist, der sich über die Höhe des Behälters erstreckt, und die Klaus (56) des Schiebers (52) auf der Höhe der Verbindung des Griffs mit dem oberen Rand des Behälters in den Griff (38) eingreift, und daß das Übertragungselement durch eine Metallstange (46) gebildet ist, die im Inneren des Griffes (38) des Behälters (18) verschiebbar montiert ist, wohingegen das Steuerelement durch einen Finger (48) gebildet ist, der vertikal durch den oberen Bereich (16) des Sockels (11) hindurch verschiebbar ist und durch eine Rückstellfeder (67) belastet ist, wobei die Metallstange (46) einerseits durch Drücken der Klaue (56) des Schiebers (52) auf das obere Ende (46a) der Stange nach unten in die Verriegelungsstellung gebracht wird, wodurch das Steuerelement (48) gegen die Kraft der Rückstellfeder (67) nach unten bewegt wird und seine Betriebsstellung einnimmt, und andererseits beim Abnehmen des Deckels (20) nach oben bewegt wird, wobei der Schieber (52) in entriegelter Stellung ist und wobei der Finger (48) durch die Feder (67) nach oben in seine Ruhestellung gebracht wird.

4. Haushaltsmixer nach einem der vorhergehenden Ansprüche, **dadurch gekennzeichnet, daß** die äußere Seitenfläche des Deckels (20) an ihrem Umfang eine Mehrzahl elastischer Zapfen (70) aufweist, die durch Einrasten beim Schließen des Deckels (20) in im Behälter (18) ausgebildete entsprechende Haken eingreifen.

5. Haushaltsmixer nach einem der vorhergehenden Ansprüche, **dadurch gekennzeichnet, daß** der Deckel (20) innen eine ringförmige Dichtung (73) mit einer Umfangslippe (74) aufweist, die bei Schließen des Deckels (20) gegen eine ringförmige Schulter (76) andrückt, die an der Innenfläche des Behälters (18) ausgebildet ist.

6. Haushaltsmixer nach einem der vorhergehenden Ansprüche, **dadurch gekennzeichnet, daß** der Deckel (20) und der obere Rand (40) des Behälters (18) durch zwei diametral entgegengesetzte, am Deckel (20) befestigte Riegel (44) miteinander zusammenwirken.
